# DEMANDE DE BREVET EUROPEEN

(11) **EP 4 477 043 A1**
(43) Date de publication de la demande: **18.12.2024**
(21) Numéro de dépôt: 24180814.6
(22) Date de dépôt: 07.06.2024
(51) Int. Cl.: A01B 13/08, A01B 15/02, A01B 15/06, A01B 15/18, A01B 23/02, A01B 35/22

(54) **DISPOSITIF DE FISSURATION À AILERON TRACTE**

(30) Priorité: 09.06.2023 FR 2305854
(71) Demandeur: Carbure Technologies SAS, 49490 Noyant-Villages (FR)
(72) Inventeur: DUMOULIN, Tom, 49400 SAUMUR (FR)
(74) Mandataire: Cabinet Nony

(57) **Abrégé**

L'invention concerne un dispositif de fissuration destiné à être tracté, selon une direction d'avancement (A), par un engin agricole de manière à fissurer un sol, ledit dispositif comportant
- un étançon (16),
- un coutre (20), et
- un aileron (26),

le coutre et l'aileron étant fixés sur l'étançon, directement ou non, de manière démontable indépendamment l'un de l'autre,
l'aileron étant fixé de manière à être tracté en service, la distance longitudinale (d_{L}) entre le point de traction (T) et le centre d'inertie (G) de l'aileron, mesurée suivant la direction d'avancement, étant supérieure à 3 cm.

## Description

### Domaine technique

La présente invention concerne un dispositif de fissuration agricole comportant un étançon et un outil de fissuration, fixé à l'étançon de manière démontable, destiné à la fissuration d'un sol. L'invention concerne également un déchaumeur ou un décompacteur ou un cultivateur ou un semoir, équipé d'un, de préférence de plusieurs tels dispositifs de fissuration.

### Etat de la technique

Un outil de fissuration est destiné à fissurer et décompacter la terre pour casser la semelle de labour afin de permettre aux racines des plantes de trouver plus facilement l'humidité, ce qui améliore leur croissance et le rendement. À cet effet, lors de son utilisation, un outil de fissuration entre classiquement d'environ 1 cm à 35 cm dans le sol.

On connaît en particulier des outils de fissuration de EP3127411A1, US11140802B2, SE2150666A1 etEP3043631B1.

Un outil de fissuration comporte classiquement un coutre qui sert à fendre la terre et la fissurer verticalement. Le coutre forme généralement l'arrête frontale de l'outil, dans la direction d'avancement de l'outil dans la terre (ou bord d'attaque). L'outil de fissuration peut également comporter une pointe qui s'étend devant et sous le coutre.

Classiquement, des outils de fissuration sont disposés les uns à côté des autres, de manière à fissurer une bande de terrain. Chaque outil de fissuration est écarté des outils de fissuration qui lui sont adjacents d'une distance d'environ 30 cm. L'action de fissuration d'un coutre et d'une pointe ne s'étend cependant pas sur une largeur de 30 cm. Pour fissurer toute la bande de terrain entre les coutres, chaque outil comporte classiquement un aileron comportant deux ailettes horizontales, qui s'étendent de chaque côté du coutre et viennent fendre la terre horizontalement. Les ailettes sont classiquement disposées derrière ou à côté du coutre, à la manière de l'empennage horizontal d'un avion. Leur travail est facilité par la fissuration verticale produite par le coutre. Comme le coutre et la pointe, les ailettes s'usent et doivent pouvoir être remplacées facilement.

Enfin, lors de travail de fissuration, le coutre, la pointe et l'aileron subissent des forces variables et des chocs, par exemple lors de contacts avec des pierres. Un choc sur une ailette peuvent en particulier créer une torsion sur l'outil, par exemple autour d'un axe sensiblement vertical. Cette torsion peut rendre plus difficile le démontage, notamment des ailettes.

Il existe un besoin pour un dispositif de fissuration plus facile à assembler et à désassembler, en particulier après une utilisation prolongée de l'outil.

### Résumé de l'invention

À cette fin, l'invention propose un dispositif de fissuration destiné à être tracté, selon une direction d'avancement, par un engin agricole de manière à fissurer un sol, ledit dispositif comportant
- un étançon,
- un coutre de fissuration, et
- un aileron.
le coutre de fissuration et l'aileron étant fixés, directement ou indirectement, sur l'étançon de manière démontable indépendamment l'un de l'autre.

**Selon un premier aspect principal de l'invention,** l'aileron est fixé de manière à être tracté en service, la distance longitudinale, mesurée entre le point de traction et le centre d'inertie de l'aileron, mesurée suivant la direction d'avancement, étant de préférence supérieure à 3 cm.

Par « tractées en service », on entend qu'en service, c'est-à-dire lorsque le dispositif de fissuration est tiré par un engin agricole, de préférence un tracteur, pour fissurer le sol, une force de traction s'exerce sur l'aileron, devant le centre d'inertie de l'aileron. Le montage de l'aileron « en traction » améliore la stabilité en service et limite ainsi le risque d'un endommagement des moyens de fixation de l'aileron, qui rendrait le démontage de l'aileron plus difficile.

En outre, cet agencement permet avantageusement le montage et le démontage de l'aileron indépendamment des montage et démontage du coutre. Le remplacement de l'aileron et du coutre après usure en est facilité. Il en résulte une économie de temps substantielle pour l'utilisateur.

De préférence, la distance longitudinale entre le point de traction et le centre d'inertie de l'aileron est supérieure à 5 cm, voire supérieure à 7 cm ou supérieure à 10 cm. Avantageusement, les mouvements de l'aileron, en particulier les mouvements latéraux, affectent peu la position des autres pièces du dispositif de fissuration. De préférence, cette distance est cependant inférieure à 30 cm, de préférence inférieure à 20 cm afin que l'aileron demeure sensiblement centré sur le plan longitudinal médian du dispositif et ne rende pas trop difficile une rotation dans un plan horizontal, quand l'engin agricole tourne.

De préférence, la distance longitudinale entre l'étançon et le centre d'inertie de l'aileron est supérieure à 5 cm, de préférence supérieure à 7 cm, de préférence supérieure à 10 cm, voire supérieure à 15 cm et/ou inférieure à 30 cm, de préférence inférieure à 20 cm.

De préférence, le centre d'inertie de l'aileron est dans un plan transversal derrière le plan transversal du centre d'inertie du coutre, de préférence derrière le coutre. De préférence, la distance longitudinale entre ces plans transversaux est supérieure à 7 cm, de préférence supérieure à 10 cm, voire supérieure à 15 cm et/ou inférieure à 30 cm, de préférence inférieure à 20 cm.

De préférence, l'aileron est fixé, de préférence enfilé sur une excroissance allongée d'axe Y s'étendant vers l'arrière du coutre, dite « porte-aileron » ou « juchoir », de préférence sous la forme d'une ou plusieurs barres et/ou plaques allongées s'étendant de préférence sensiblement horizontalement.

De préférence, l'aileron est configuré de manière à devoir doit être glissé sur le porte-aileron lors de son montage. De préférence, le porte-aileron définit au moins une butée supérieure et/ou une butée inférieure empêchant tout déplacement de l'aileron vers le haut et/ou vers le bas, respectivement.

De préférence, l'aileron comporte deux ailettes reliées par une jonction, le porte-aileron présentant une forme complémentaire à la jonction de manière à empêcher une rotation de l'aileron autour de l'axe du porte-aileron.

De préférence, l'axe Y du porte-aileron forme, dans la position de service, un angle inférieur à 20° avec un plan horizontal.

De préférence, l'aileron est verrouillé en position sur le porte-aileron au moyen d'au moins une tige de blocage, par exemple d'une vis ou d'une goupille. De préférence, la tige de blocage tend, sous l'effet de son poids, vers une position de verrouillage en position de l'aileron sur le porte-aileron. De préférence, elle s'étend, dans la configuration de service, dans un plan vertical, de préférence dans un plan transversal, de préférence verticalement.

Dans un mode de réalisation, le dispositif comporte un adaptateur, fixé, de manière démontable, sur l'étançon, et l'aileron est fixé sur l'adaptateur. De préférence, l'adaptateur comporte plusieurs porte-ailerons s'étendant de préférence les uns au-dessus des autres, de préférence dans le plan longitudinal médian, deux porte-ailerons successifs, de préférence deux porte-ailerons successifs quelconques, étant de préférence écartés d'une distance verticale supérieure à 4 cm, de préférence supérieure à 5 cm, de préférence supérieure à 10 cm, et/ou inférieure à 40 cm, de préférence inférieure à 30 cm.

Dans un mode de réalisation, le coutre est fixé sur un support de coutre, lui-même fixé sur l'étançon. De préférence, l'aileron est fixé sur le support de coutre, de préférence sur un porte-aileron du support de coutre.

Dans un mode de réalisation, l'aileron est fixé sur le coutre, lui-même fixé sur un support de coutre ou sur l'étançon. De préférence, l'aileron est fixé sur un porte-aileron du coutre.

Dans un mode de réalisation, le dispositif comporte une pointe de fissuration fixée, de manière démontable, sur un support de coutre, et l'aileron est fixé sur la pointe, de préférence sur la tige de la pointe.

Dans un mode de réalisation, le dispositif comporte une plaque de protection latérale fixée, de manière démontable, sur l'étançon, et l'aileron est fixé sur la plaque de protection.

La pièce sur laquelle l'aileron est fixé est appelée « support d'aileron ».

**Selon un deuxième aspect principal de l'invention,** particulièrement avantageux, l'aileron présente la forme d'une tôle plane d'épaisseur constante, en forme de chevron. L'aileron est alors de préférence fixé sur une plaque, de préférence fixé entre deux plaques portée(s) par, de préférence soudée(s) sur le support d'aileron, les plaques, de préférence horizontales, étant de préférence écartées l'une de l'autre d'une distance sensiblement égale à ladite épaisseur. De préférence, la jonction entre les ailettes de l'aileron est percée d'un orifice traversant. L'invention porte également sur un tel aileron, avantageusement rapide à fabriquer, à monter et à démonter.

**Selon un troisième aspect principal de l'invention,** l'aileron présente une forme de chevron pointant vers l'arrière, en considérant la direction d'avancement. De préférence, vu de dessus, l'aileron présente une forme générale en « V », symétrique par rapport au plan longitudinal médian Pm, la pointe du « V » étant à l'extrémité arrière de l'aileron.

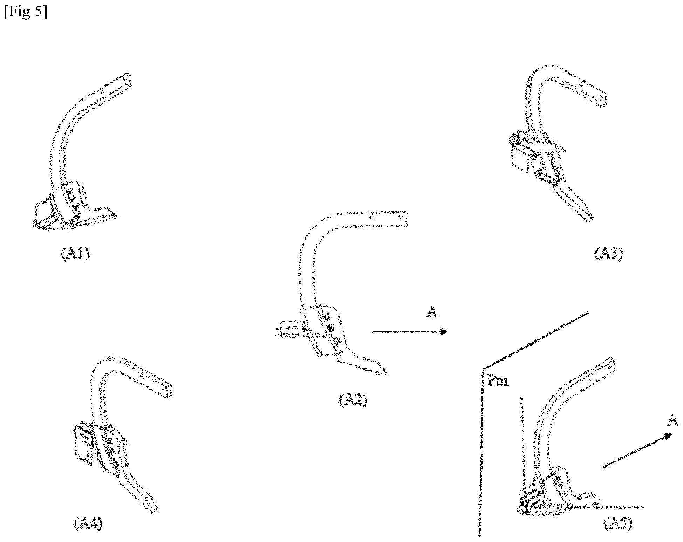

Le V est représenté en traits pointillés sur la figure 5 (A5).

De manière remarquable, une telle forme d'aileron, « en chevron inversé », permet de ramener la terre fissurée vers le plan longitudinal médian. La surface du sol après passage du dispositif de fissuration en est avantageusement rendue plus plane. L'invention porte également sur un tel aileron.

Cet aspect principal de l'invention est notamment illustré sur la figure 5.

**Selon un quatrième aspect principal de l'invention,** le coutre ou l'adaptateur (pour le cas où le dispositif comporte un adaptateur) définit un logement tubulaire de réception de l'étançon, de forme complémentaire à celle de l'étançon.

Un dispositif selon le quatrième aspect principal de l'invention peut présenter une ou plusieurs des caractéristiques optionnelles suivantes :
- le coutre comporte une plaque de protection arrière, deux plaques de protection latérales et une plaque de protection avant, ou « frontale », de préférence soudées les unes aux autres, définissant ensemble un fourreau de section sensiblement identique à la section transversale du tronçon de l'étançon qui y est logé;
- le dispositif comporte une tige de blocage de l'étançon dans le fourreau, ladite tige de blocage s'étendant de préférence dans un plan longitudinal médian du dispositif ;
- la tige de blocage de l'étançon est un boulon comportant :
   - une vis comportant une tête en appui sur la plaque de protection arrière et traversant la plaque de protection arrière, l'étançon et la plaque de protection avant,
   - un écrou vissé sur la vis et en appui sur la plaque de protection avant ;
- l'écrou est logé dans un trou, de préférence traversant, de préférence transversal, ménagé à travers le coutre ;
- le dispositif comporte un aileron, de préférence fixé sur le coutre ou sur un porte-aileron fixé, de préférence soudé, sur le coutre ;
- le dispositif comporte un aileron qui présente, vu de dessus, la forme d'un chevron pointant vers l'arrière ;
- le coutre comporte une excroissance allongée d'axe Y, s'étendant vers l'arrière du coutre, dite « porte-aileron », sous la forme d'une ou plusieurs barres et/ou plaques allongées, sur laquelle l'aileron est fixé, de manière démontable.

L'invention concerne également un adaptateur et un coutre adaptés à un dispositif selon le quatrième aspect principal de l'invention.

Bien entendu, dans la mesure de leur compatibilité technique, les différents aspects principaux de l'invention peuvent être combinés.

L'invention concerne par ailleurs un appareil de fissuration d'un sol, notamment un déchaumeur ou un décompacteur ou un cultivateur ou un semoir, comportant plus de 3 dispositifs de fissuration selon l'invention.

### Brève description des figures

D'autres caractéristiques et avantages de l'invention apparaitront encore à l'examen de la description qui va suivre et au regard du dessin annexé dans lequel :
- la figure 1 [Fig 1] illustre un mode de réalisation d'un dispositif de fissuration selon l'invention, en perspective et en vue éclatée (a), vu de côté (b) et vu de dessus (c), l'aileron étant fixé, de manière démontable, sur la pointe ;
- la figure 2 [Fig 2] illustre différents modes de réalisation d'un dispositif de fissuration selon l'invention, en perspective, dans lesquels l'aileron est fixé, de manière démontable, sur un adaptateur prenant l'étançon en sandwich, avec le coutre ;
- la figure 3 [Fig 3] illustre un mode de réalisation d'un dispositif de fissuration selon l'invention, en perspective, dans lequel 1 l'aileron est fixé, de manière démontable, sur un porte-aileron fixé sur des plaques de protection ;
- la figure 4 [Fig 4] illustre différents modes de réalisation d'un dispositif de fissuration selon l'invention, en vues latérales, dans lesquels l'aileron est fixé, de manière démontable, sur un adaptateur définissant un logement tubulaire de réception de l'étançon ;
- la figure 5 [Fig 5] illustre différents modes de réalisation d'un dispositif de fissuration selon l'invention comportant un aileron en chevron inversé ;
- la figure 6 [Fig 6] illustre un coutre selon l'invention, pour la mise en oeuvre du quatrième aspect principal de l'invention ;
- la figure 7 [Fig 7] illustre un mode de réalisation d'un dispositif de fissuration selon
l'invention dans lequel l'aileron est fixé, de manière démontable, sur un porte-aileron fixé sur des plaques de protection.

Dans les différentes figures, non limitatives, les éléments identiques ou analogues sont désignés par la même référence numérique. Pour la concision de la présente description, ces éléments identiques ou analogues ne sont pas décrits en détail dans chaque exemple, seules les différences distinguant les exemples étant décrites en détail.

### Définitions

La « configuration de service » est une configuration dans laquelle l'outil de fissuration est prêt à être utilisé et attelé à un engin agricole, de préférence un tracteur, pour fissurer un sol horizontal. Les différentes pièces constitutives de l'outil de fissuration sont donc assemblées pour être opérationnelles.

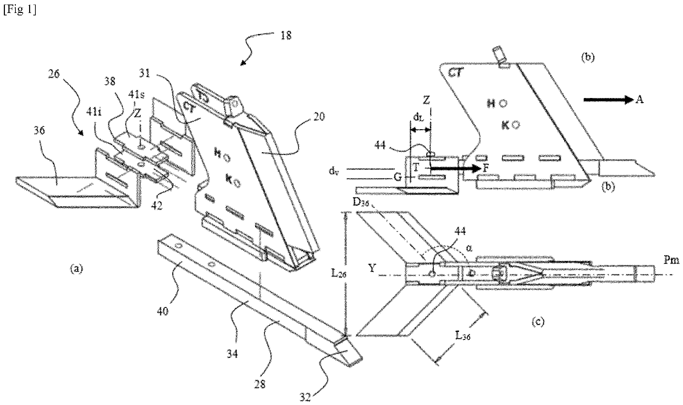

L'outil de fissuration est « en service » lorsqu'il est dans la configuration de service et est tracté, selon une « direction d'avancement» A (voir figure 1), par l'engin agricole pour fissurer le sol horizontal.

Dans la présente description, les termes « inférieur », « supérieur », « au-dessus », « en dessous », « horizontal », « vertical », « avant », « arrière », « devant », « derrière », « droit », « gauche » et « latéral » sont définis par rapport à la configuration de service.

Les adjectifs « droit » et « gauche » font référence à un observateur regardant, depuis l'outil de fissuration, vers l'avant, dans la direction d'avancement.

On appelle « plan longitudinal médian » le plan vertical parallèle à la direction d'avancement et qui, dans la configuration de service, passe par le centre d'inertie de l'outil de fissuration. Classiquement, l'étançon s'étend dans le plan longitudinal médian.

Sauf indication contraire, un plan « transversal » est un plan vertical perpendiculaire à la direction d'avancement, et la direction « latérale » s'étend horizontalement dans un plan transversal.

La distance « verticale » entre deux points est la distance entre les hauteurs, c'est-à-dire entre les coordonnées selon l'axe vertical à partir du sol, de ces ceux points, dans la configuration de service.

La distance « longitudinale » entre deux points est la différence entre les coordonnées de ces deux points, selon l'axe longitudinal, c'est-à-dire la distance entre ces deux points le long de la direction d'avancement.

Par « fixer », on entend « rigidement solidariser ».

Le coutre et l'aileron peuvent être fixés directement ou indirectement sur l'étançon. Par « fixation directe » d'une première pièce sur une deuxième pièce, on entend que la première pièce est supportée par la deuxième pièce, sans pièce intermédiaire. Une fixation indirecte signifie que la première pièce n'est pas appliquée en contact sur la deuxième pièce, et qu'une pièce intermédiaire est interposée entre les première et deuxième pièces. A défaut d'indication contraire, « fixer » signifie « fixer directement ».

### Description détaillée

Un appareil de fissuration d'un sol, classiquement d'une terre agricole, comme un déchaumeur ou un décompacteur ou un cultivateur ou un semoir, comporte classiquement plus de 3, plus de 10, ou plus de 20, ou plus de 40 ou plus de 60 et/ou moins de 100 dispositifs de fissuration 12 selon l'invention. Les dispositifs de fissuration 12 sont de préférence disposés les uns à côté des autres suivant au moins une ligne transversale, de manière à fissurer une bande de terrain en service. Ils sont de préférence tous fixés à un châssis commun, tracté par un engin agricole, de préférence un tracteur.

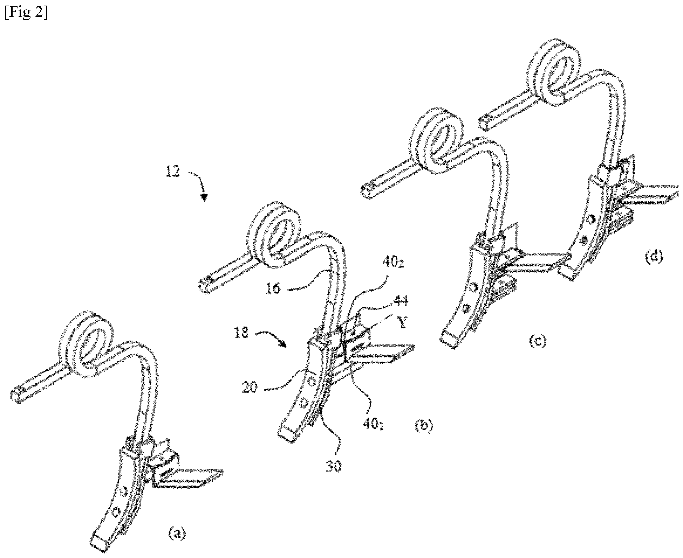

Chaque dispositif de fissuration comporte un étançon 16 et un outil de fissuration 18, fixé à l'étançon (voir figure 2).

### Etançon

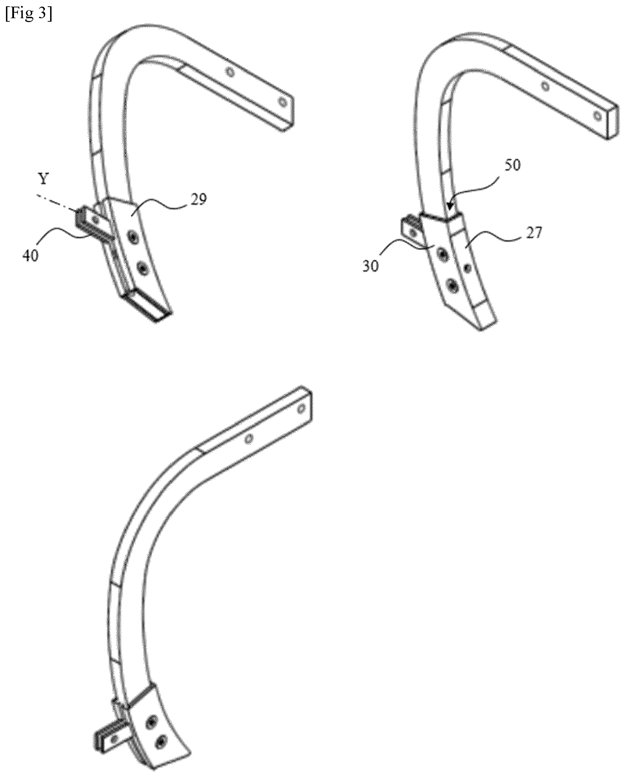

L'étançon 16 présente une forme droite ou, de préférence, une forme de virgule ou de « dent en C » (figure 3). Il présente alors classiquement une partie supérieure s'étendant sensiblement horizontalement, une partie inférieure sur laquelle est fixée l'outil de fissuration, et un tronçon central courbe rejoignant la partie inférieure et la partie supérieure.

L'étançon 16 peut comporter une « queue de cochon », c'est-à-dire s'enrouler sur lui-même de manière à former une boucle, comme illustré sur la figure 2.

L'étançon 16 présente de préférence une épaisseur sensiblement constante, notamment au moins dans sa partie inférieure. L'étançon peut notamment y présenter une section transversale (perpendiculairement à la direction de la longueur de l'étançon) constante, à l'exception d'une partie terminale éventuellement effilée.

La section transversale de l'étançon peut être sensiblement rectangulaire ou carrée. La largeur de l'étançon peut être supérieure à 10 mm, de préférence supérieure à 20 mm, et/ou inférieure à 50 mm, de préférence inférieure à 40 mm. La longueur de la section transversale de l'étançon est de préférence supérieure à 30 mm, supérieure à 50 mm, supérieure à 70 mm, et/ou inférieure à 300 mm, inférieure à 150 mm, inférieure à 150 mm, inférieure à 100 mm.

De préférence, l'étançon 16 présente une section transversale de forme rectangulaire ou carrée sur plus de 50%, de préférence plus de 80%, voire sensiblement 100% de sa longueur. De préférence, l'étançon présente la forme d'un « fer plat », c'est-à-dire dont les deux grandes faces sont sensiblement planes et sensiblement parallèles l'une à l'autre.

### Outil de fissuration

Chaque outil de fissuration 18 comporte un coutre 20, un aileron 26 et optionnellement un support de coutre 27 et/ou une pointe 28 et/ou une plaque de protection de l'étançon 29 et/ou un adaptateur 30 pour fixer l'aileron. Toutes ces pièces sont fixées les unes aux autres dans la configuration de service, de manière démontable.

Tous les moyens de fixation démontables conventionnels sont possibles, en particulier pour fixer
- le coutre sur le support de coutre ou sur l'étançon,
- le support de coutre sur l'étançon,
- la pointe sur le support de coutre,
- l'aileron sur le coutre, l'étançon, l'adaptateur, la plaque de protection ou le support de coutre,
- la plaque de protection de l'étançon, ou
- l'adaptateur sur l'étançon.

La possibilité de démontage permet de remplacer les pièces d'usure (coutre, pointe, aileron, plaque de protection) quand elles sont usées. On ne remplace donc que la pièce usée, ce qui permet une économie substantielle pour l'utilisateur.

En particulier, une ou plusieurs vis, un ou plusieurs boulons ou une ou plusieurs goupilles peuvent être utilisés. La fixation de l'outil de fissuration sur l'étançon se fait de préférence au moyen de vis longitudinales et/ou de boulons longitudinaux, de préférence encore exclusivement au moyen de boulons longitudinaux. Par « vis longitudinale » ou « boulon longitudinal », on entend que la vis ou le boulon s'étende(nt) dans le plan longitudinal médian du dispositif de fissuration.

Une fixation au moyen de vis, boulons ou goupilles transversales est également possible, comme illustré sur la figure 2.

### Contre

Le coutre 20 présente classiquement une pluralité de plaquettes définissant le bord d'attaque de l'outil de fissuration 18. Ces plaquettes sont en un matériau particulièrement rigide, par exemple en carbure de tungstène. À la place des plaquettes ou en combinaison avec les plaquettes, le bord d'attaque du coutre 20 peut être en matériau anti-abrasion, notamment en carbure de bore ou carbure de chrome, le matériau anti-abrasion étant déposé par soudure, arc-plasma ou tout autre procédé de dépôt.

Le coutre 20 peut être fixé sur un support de coutre 27, de manière démontable, le support de coutre étant lui-même fixé à l'étançon. Alternativement, le coutre 20 peut être fixé directement sur l'étançon, de manière démontable, par exemple vissé sur l'étançon, de préférence au moyen de boulon(s) 39 ou de vis s'étendant dans le plan longitudinal médian. Une fixation au moyen de boulons longitudinaux confère de la compacité, limite l'effet de levier en service, et augmente la surface de contact de ces boulons avec l'étançon, ce qui réduit les risques de matage et améliore la robustesse.

Dans un mode de réalisation, comme illustré sur la figure 3, le support de coutre 27 et l'adaptateur pour fixer l'aileron constituent une même pièce.

Le support de coutre 27 peut notamment être en un acier à haute limite élastique, ou « HLE ». Le support de coutre 27 peut comporter des soudures anti-abrasion, notamment de carbure de bore ou de carbure de chrome.

De préférence, le coutre ou le support de coutre présente deux joues latérales 31 (voir figure 1) qui s'étendent de préférence depuis le bord d'attaque du coutre, vers l'arrière, de chaque côté de l'étançon. Les joues latérales 31 protègent ainsi l'étançon en service. De préférence, le coutre ou le support de coutre 27 forme un logement de réception de l'étançon, ou « chaussette ».

Dans un mode de réalisation, ni le coutre, ni le support de coutre 27 ne comportent de joues latérales.

### Pointe

De préférence, l'outil de fissuration comporte un support de coutre 27 et, sous le support de coutre 27, une pointe de fissuration 28. Cette pointe 28 comporte une tête 32 destinée à former un bord d'attaque de l'outil de fissuration et une tige de pointe 34. Le bord d'attaque de la tête peut notamment être muni de plaques de matériau très résistant comme du carbure de tungstène ou du métal anti-abrasion comme du carbure de bore ou du carbure de chrome. Ce dernier peut être déposé par tout procédé de dépôt, notamment par soudure.

La pointe 28 est montée de manière démontable sur le coutre 20 ou, de préférence, sur le support de coutre 27. Le coutre 20 et/ou le support de coutre 27 peuvent en particulier définir un fourreau de réception de la pointe 28.

### Plaque de protection

Dans un mode de réalisation, le dispositif comporte une plaque de protection latérale 29 fixée, de manière démontable, sur l'étançon (figure 3). De préférence, le dispositif comporte des plaques de protection latérales droite et gauche fixées sur les flancs droit et gauche de l'étançon, respectivement.

### Adaptateur

Dans un mode de réalisation préféré (figure 2), l'aileron n'est pas fixé directement sur l'étançon. De préférence, le dispositif comporte un adaptateur 30, fixé, de manière démontable, sur l'étançon, de préférence au moyen de vis, boulon ou goupilles longitudinales, et l'aileron est fixé sur l'adaptateur 30.

De préférence, l'adaptateur est fixé sur l'étançon du côté opposé au coutre, l'adaptateur et le coutre prenant ainsi en sandwich l'étançon (figure 2). De préférence, l'adaptateur 30 présente une surface en contact avec l'étançon dont l'aire est supérieure à 10 cm², de préférence supérieure à 20 cm², de préférence supérieure à 40 cm², de préférence supérieure à 50 cm², et/ou de préférence supérieure à 200 cm². L'aire élevée de cette surface de contact améliore la stabilité de l'adaptateur en service.

### Aileron

L'aileron 26 comporte une ou plusieurs ailettes 36 destinées à fendre la terre de chaque côté de la fente créée par le coutre. Son envergure L₂₆ est de préférence supérieure à 10 cm, de préférence supérieure à 15 cm, de préférence supérieure à 20 cm et/ou inférieure à 40 cm, de préférence inférieure à 30 cm, de préférence inférieure à 25 cm.

L'aileron 26 peut être fixé sur l'étançon, sur le coutre, sur la pointe, sur le support de coutre, sur une plaque de protection ou, de préférence, sur l'adaptateur 30 de raccordement à l'étançon. De manière générique, on qualifie de « support d'aileron » la pièce sur laquelle l'aileron est fixé.

De préférence, l'aileron 26 comporte deux ailettes 36 et une jonction 38, interposée entre les ailettes, et par laquelle l'aileron est fixé sur le support d'aileron. Les ailettes sont de préférence soudées sur la jonction ou venues de matière avec la jonction. Les ailettes sont de préférence identiques et s'étendent de chaque côté de la j onction.

La jonction 38 est configurée de manière que, dans la configuration de service, les deux ailettes 36 s'étendent de chaque côté de l'étançon 16, symétriquement par rapport au plan longitudinal médian Pm. La j onction 38 peut être en particulier constituée par un assemblage de plusieurs plaques. En particulier, elle peut comporter des plaques supérieure et inférieure horizontales assemblées à des plaques latérales verticales, comme représenté sur la figure 1.

Le plan d'une ailette, de préférence de chaque ailette peut être incliné vers le haut ou vers le bas, permettant alors, respectivement, de pousser la terre vers le haut ou vers le bas. L'angle formé entre le plan de l'ailette et un plan horizontal est de préférence inférieur à 20°, de préférence inférieur à 10°, de préférence inférieur à 5°. De préférence, les ailettes sont agencées de manière à s'étendre horizontalement en configuration de service.

De préférence, les ailettes sont coplanaires et s'étendent dans un même plan d'ailettes. Dans la configuration de service, le plan d'ailettes est de préférence horizontal, permettant ainsi de stabiliser la hauteur de l'outil de fissuration en service.

Toutes les dimensions classiques d'ailettes sont possibles. De préférence, chaque ailette s'étend latéralement à plus de 5 cm, de préférence plus de 10 cm et/ou moins de 30 cm, de préférence moins de 20 cm du plan longitudinal médian. La longueur d'une ailette L₃₆, mesurée suivant son axe D₃₆, est de préférence de plus de 5 cm, de préférence plus de 10 cm, de préférence plus de 15 cm et/ou moins de 40 cm ou moins de 30 cm. La largeur d'une ailette, mesurée perpendiculairement à son axe D₃₆, est de préférence comprise entre 3 cm et 10 cm. Elle est de préférence constante. De préférence, chaque ailette présente une surface supérieure présentant une aire supérieure à 10 cm², de préférence supérieure à 20 cm² et/ou inférieure à 150 cm². La largeur d'une ailette, mesurée perpendiculairement à son axe est de préférence comprise entre 3 cm et 10 cm. Elle est de préférence constante. Chaque ailette est de préférence plane. L'épaisseur d'une ailette, de préférence de chaque ailette, mesurée perpendiculairement au plan de l'ailette, est de préférence supérieure à 5 mm et inférieure à 2 cm.

Vues de dessus, les ailettes 36 forment de préférence un chevron, comme illustré sur la figure 1.

Dans le mode de réalisation de la figure 1, l'aileron pointe vers l'avant. Chaque ailette s'étend selon un axe D₃₆ qui, dans la configuration de service, forme un angle α supérieur à 110°, de préférence supérieur à 120° et/ou inférieur à 160°, de préférence inférieur à 150°, avec le plan longitudinal médian Pm.

Dans le mode de réalisation de la figure 5, l'aileron pointe vers l'arrière. Chaque ailette s'étend selon un axe D₃₆ qui, dans la configuration de service, forme un angle α supérieur à 20°, de préférence supérieur à 30° et/ou inférieur à 70°, de préférence inférieur à 60°, avec le plan longitudinal médian Pm.

Dans le mode de réalisation, l'aileron est rectiligne. Les ailettes sont alignées selon un axe D₃₆ commun qui, dans la configuration de service, forme de préférence un angle α de 90° avec le plan longitudinal médian Pm. La fissuration en est améliorée.

Les ailettes peuvent s'étendre en dessous ou au-dessus de la pointe, et/ou en dessous ou au-dessus du coutre.

Dans un mode de réalisation, les ailettes sont verticalement écartées du coutre ou de la pointe de plus de 1 cm et/ou de moins de 10 cm, de préférence de moins de 5 cm.

De préférence, elles sont au dessus du coutre, ce qui améliore la planéité du sol après le passage de l'outil de fissuration.

Dans un mode de réalisation, les deux ailettes sont reliées l'une à l'autre par une jonction 38 qui s'étend dans le prolongement des ailettes, de préférence dans un plan d'ailettes commun aux deux ailettes. En particulier, elles peuvent former, avec la jonction 38, une pièce monobloc, de préférence découpée dans une tôle métallique. Le coût de fabrication de l'aileron en est avantageusement considérablement réduit.

Dans un mode de réalisation, les deux ailettes sont reliées l'une à l'autre par une jonction 38 qui définit un logement dans lequel une partie du support d'aileron est disposée. Le maintien en position de l'aileron en est avantageusement amélioré.

L'aileron 26 est de préférence monobloc, les ailettes étant indémontables.

De préférence, le support d'aileron comporte une excroissance, ou « porte-aileron » 40, qui fait saillie vers l'arrière selon un axe de porte-aileron Y, et l'aileron est fixé sur ledit porte-aileron.

Le porte-aileron présente de préférence la forme d'une ou plusieurs barres et/ou plaques allongées.

L'axe de porte-aileron appartient de préférence au plan longitudinal médian. Il est de préférence dans le plan d'ailettes. Il forme avec un plan horizontal un angle de préférence inférieur à 30°, de préférence inférieur à 20°, de préférence inférieur à 10°, de préférence sensiblement nul.

Le porte-aileron présente de préférence une forme profilée, c'est-à-dire une section constante tout au long de l'axe de porte-aileron Y.

Les formes de l'aileron 26 et du porte-aileron 40 sont de préférence déterminées pour, dans la configuration de service, bloquer un mouvement de rotation de l'aileron autour de l'axe de porte-aileron Y et/ou bloquer un mouvement vertical de l'aileron vers le haut ou vers le bas. De préférence, le porte-aileron définit une butée supérieure 41s et/ou une butée inférieure 41i interdisant le mouvement de l'aileron vers le haut et/ou vers le bas, respectivement. De préférence, le porte-aileron définit encore une butée droite et/ou une butée gauche interdisant le mouvement de l'aileron vers la droite et/ou vers la gauche du porte-aileron, respectivement. De préférence, au moins une desdites butées, de préférence chaque dite butée définit une surface de butée ayant une aire supérieure à 1 cm², de préférence supérieure à 5 cm², de préférence supérieure à 10 cm², de préférence supérieure à 20 cm², de préférence supérieure à 25 cm² et/ou inférieure à 50 cm².

De préférence, la jonction 38 définit un logement 42 dans lequel le porte-aileron peut être introduit. Dans un mode de réalisation, le porte-aileron présente la forme d'une barre, pleine ou creuse, de préférence de section transversale (définie perpendiculairement à l'axe de porte-aileron Y) polygonale, de préférence carrée ou rectangulaire, et la jonction 38 définit un fourreau de forme complémentaire à celle de ladite section transversale de la barre. Le montage de l'aileron implique ainsi un coulissement de la jonction sur la barre, exclusivement selon l'axe de porte-aileron Y (figure 1). La jonction 38 peut entourer totalement le porte-aileron (figure 1), ou partiellement (figure 2). Dans le mode de réalisation (a) de la figure 2, on peut en particulier observer que la jonction ne présente pas de paroi inférieure, l'aileron pouvant être ainsi posé sur le porte-aileron et étant ainsi bloqué latéralement et vers le haut.

Dans un mode de réalisation, le porte-aileron présente la forme de deux plaques planes allongées entre lesquels la jonction d'un aileron peut-être introduite. La jonction 38 de l'aileron présente de préférence la forme d'une plaque dont l'épaisseur est sensiblement égale à l'écartement entre les deux plaques. Le montage de l'aileron implique ainsi un glissement de la jonction entre les plaques, les plaques servant de butées supérieure et inférieure imposant, lors du montage ou du démontage de l'aileron, un déplacement de la jonction exclusivement dans le plan médian entre les deux plaques.

De préférence encore, la jonction de l'aileron et le support d'aileron, de préférence un porte-aileron du support d'aileron, sont percés par des orifices respectifs qui, lors du montage peuvent être mis en regard l'un de l'autre, c'est-à-dire alignés selon un axe Z, de manière qu'une tige de blocage 44, de préférence une vis ou une goupille, de préférence une goupille, puisse y être introduite, de manière à immobiliser l'aileron sur le support d'aileron.

Dans la configuration de service, l'axe Z forme, avec un plan vertical, un angle inférieur à 15°, de préférence inférieur à 10°, de préférence inférieur à 5°. L'axe Z est de préférence sensiblement vertical. Le montage et le démontage sont avantageusement particulièrement simples.

En particulier, le support d'aileron peut être un adaptateur comportant une embase fixée sur l'étançon, le coutre ou le support de coutre, et un, de préférence plusieurs porte-ailerons, de préférence horizontaux, fixés sur l'embase, de préférence indémontables, par exemple soudés sur l'embase.

De préférence, le support d'aileron comporte plusieurs porte-ailerons, référencés 40₁ et 40₂ sur la figure 2, permettant de fixer l'aileron à différentes hauteurs. La différence de hauteur, ou « distance verticale », entre deux porte-ailerons adjacents est de préférence supérieure à 2 cm, de préférence supérieure à 5 cm, de préférence supérieure à 10 cm et/ou inférieure à 30 cm, de préférence inférieure à 20 cm.

En service, l'aileron est tracté, c'est-à-dire tiré vers l'avant, de préférence par une tige de blocage 44, elle-même tractée par le support d'aileron.

Les efforts de traction sont exercés dans des zones de contact entre l'aileron et la « pièce de traction », par exemple la tige de blocage. Ces efforts sont équivalents à une force de traction F dans la valeur est égale à la somme des efforts de traction, exercée en un point de traction T. Le point de traction est déterminé de manière que le moment de force exercé par la force de traction sur l'aileron soit identique à celui de l'ensemble des efforts de traction.

Le point de traction T est devant le centre d'inertie G de l'aileron, à la même hauteur ou à une hauteur différente.

La distance longitudinale d_{L} entre le point de traction T et le centre d'inertie G de l'aileron est de préférence supérieure à 1 cm, de préférence supérieure à 5 cm, de préférence supérieure à 10 cm et/ou de préférence inférieure à 20 cm, de préférence inférieure à 15 cm.

Un positionnement du centre d'inertie derrière et à distance du point de traction stabilise la trajectoire de l'aileron et limite ainsi les efforts exercés sur la tige de blocage en service. Le risque d'un endommagement, par exemple d'une déformation de la tige de blocage, en est réduit. L'aileron reste ainsi facilement démontable, même après une utilisation prolongée du dispositif de fissuration.

Le centre d'inertie de l'aileron peut être à une hauteur supérieure, identique ou inférieure à la hauteur du point de traction.

De préférence, le point de traction T est à une hauteur (distance vers le haut, à partir du sol) supérieure à celle du centre d'inertie G. La distance verticale dv entre le point de traction T et le centre d'inertie G de l'aileron est de préférence supérieure à 1 cm et inférieure à 10 cm.

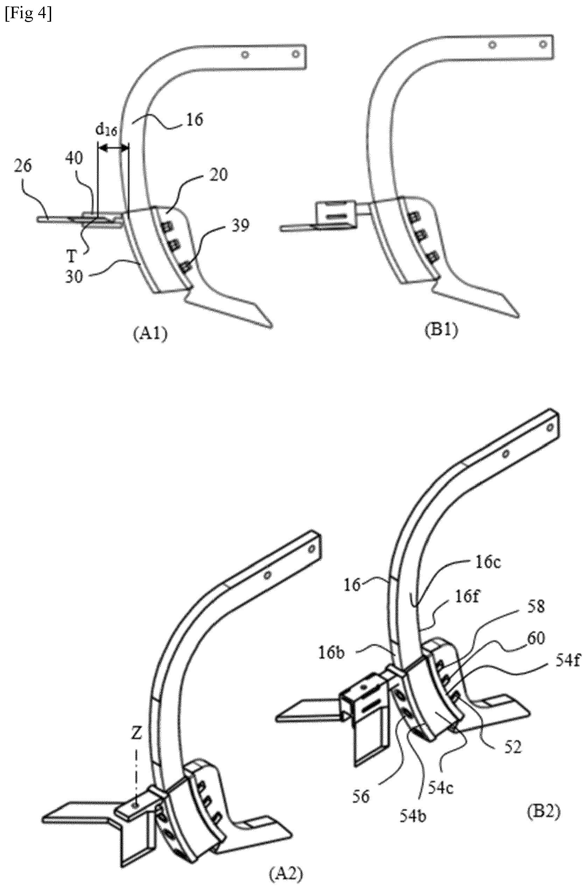

Le point de traction T est de préférence derrière l'étançon. La distance longitudinale d₁₆ entre le point de traction T et l'étançon 16, mesurée à la hauteur du point de traction T (voir figure 4) est de préférence supérieure à 1 cm, de préférence supérieure à 5 cm, de préférence supérieure à 10 cm et/ou de préférence inférieure à 20 cm, de préférence inférieure à 15 cm. Avantageusement, l'aileron est ainsi tracté à travers de la terre qui a déjà été au moins partiellement ameublie par le passage du coutre et de l'étançon, ce qui réduit la consommation énergétique.

La distance longitudinale entre le centre d'inertie G de l'aileron et l'étançon 16, mesurée à la hauteur du centre d'inertie G est de préférence supérieure à 5 cm, de préférence supérieure à 10 cm, de préférence supérieure à 12 cm et/ou de préférence inférieure à 25 cm, de préférence inférieure à 20 cm.

### Quatrième aspect principal

Le quatrième aspect principal de l'invention est notamment illustré sur les figures 4, 5 et 6.

Selon le quatrième aspect principal de l'invention, le coutre 20 ou l'adaptateur 30 (pour le cas où le dispositif comporte un adaptateur) définit un logement 50 de réception de l'étançon 16, de forme générale tubulaire, rectiligne ou courbe, complémentaire à celle de l'étançon.

La forme « tubulaire » du logement 50 signifie que le contour qui délimite le logement dans une section transversale est constant lorsque le plan transversal de la section se déplace selon l'axe principal du logement, c'est-à-dire selon « l'axe de la chambre tubulaire définie par le logement 50 ». Par « plan transversal », on entend ici un plan perpendiculaire à l'axe principal du logement.

La section transversale du logement 50, c'est-à-dire perpendiculairement à l'axe de la chambre tubulaire définie par le logement 50, est sensiblement identique, mais légèrement plus grande, à la section transversale de l'extrémité inférieure de l'étançon (c'est-à-dire à la section de l'étançon dans un plan perpendiculaire à la direction de la longueur de l'extrémité inférieure de l'étançon), de manière que l'étançon soit contraint de coulisser dans le logement lors du montage du coutre 20 ou de l'adaptateur 30.

La forme complémentaire du logement 50 facilite ainsi le montage du coutre ou de l'adaptateur.

L'étançon logé dans le logement de réception n'est avantageusement pas comprimé, ce qui limite le risque de difficulté lors du démontage du coutre ou de l'adaptateur.

Pour immobiliser le coutre ou l'adaptateur sur l'étançon après son introduction dans le logement, il suffit avantageusement de bloquer son coulissement, par exemple au moyen d'au moins une tige de blocage 52, de préférence au moyen d'au moins une vis, d'au moins un boulon ou d'au moins une goupille, par exemple longitudinale ou transversale.

Le maintien résultant de la complémentarité de forme entre l'étançon et le logement permet avantageusement de n'utiliser qu'une unique tige de blocage 52.

Le coutre ou l'adaptateur comporte avantageusement, non seulement des plaques de protection latérales 54c, ou « joues latérales », comme décrit dans PCT/IB2014/064317, mais aussi une plaque de protection arrière 54b s'étendant contre la face arrière 16b de l'étançon et une plaque de protection 54f avant s'étendant contre la face avant 16f de l'étançon. La plaque de protection arrière protège l'étançon, mais contribue également au maintien en position du coutre sur l'étançon, sans comprimer l'étançon.

Dans un mode de réalisation, la plaque de protection 54f présente une surlongueur, au-dessus du logement tubulaire, c'est-à-dire s'étend au-dessus du logement. La surlongueur est en appui sur l'étançon, de préférence épouse la forme de l'étançon, pour améliorer la reprise des efforts et le maintien en position.

De préférence, le logement 50 de réception de l'étançon est délimité par une plaque de protection arrière, deux plaques de protection latérales et une plaque de protection avant soudées les unes aux autres de manière à définir un fourreau de section sensiblement identique à la section transversale de l'étançon, de préférence de section rectangulaire ou carrée.

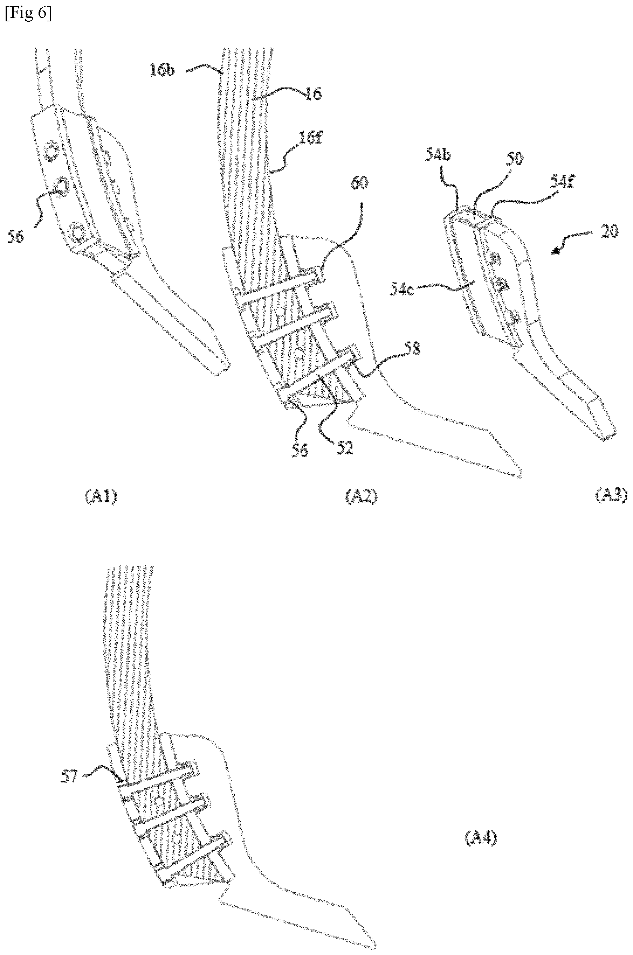

Dans un mode de réalisation particulièrement avantageux illustré sur la figure 4 ou 6, le dispositif de fissuration comporte une ou plusieurs vis longitudinales qui traverse(nt) la plaque de protection arrière et pénètre(nt) dans l'étançon. De préférence, le dispositif de fissuration comporte une ou plusieurs vis longitudinales qui traversent successivement la plaque de protection arrière, l'étançon et la plaque de protection avant, un écrou étant vissé sur chaque vis, en appui sur la plaque de protection arrière ou sur la plaque de protection avant selon l'orientation de la vis. L'écrou est de préférence en appui sur la plaque de protection avant, et donc la tête de la vis en appui sur la plaque de protection arrière, car il est plus facile d'introduire la vis par la plaque de protection arrière.

Une fixation au moyen de boulons longitudinaux (un boulon étant constitué d'une vis longitudinale et d'un écrou) est particulièrement avantageuse.

Tout d'abord, elle permet une grande compacité. L'amélioration de la compacité du dispositif permet de limiter l'effet de levier qu'il crée lorsqu'il est tracté. Ceci représente une amélioration de la sécurité pour l'utilisateur.

En outre, la mise en oeuvre de boulons longitudinaux s'étendant longitudinalement dans l'étançon, permet d'augmenter la surface de contact de ces boulons avec l'étançon. On réduit ainsi les risques de matage, le cisaillement est réduit. Le dispositif de fissuration est ainsi plus robuste.

Dans un mode de réalisation préféré illustré sur la figure 4, la tige 52 de blocage de l'étançon est un boulon comportant :
- une vis comportant une tête 56 en appui sur la plaque de protection arrière et traversant la plaque de protection arrière 54b, l'étançon 16 et la plaque de protection avant 54f, et
- un écrou 58 vissé sur la vis et en appui sur la plaque de protection avant.

L'écrou 58 est logé dans un trou traversant 60, de préférence transversal, ménagé à travers le coutre. L'écrou est avantageusement protégé, tout en étant facilement accessible pour le démontage. L'étançon n'est pas comprimé, tout en étant parfaitement immobilisé.

De préférence, la tête 56 de la vis ne fait pas saillie de la plaque de protection arrière 54b, comme représenté sur la figure 6. Elle est ainsi protégée, ce qui facilite le démontage après utilisation du dispositif de fissuration.

Dans un mode de réalisation, des trous traversants sont ménagés dans la plaque de protection avant et/ou dans la plaque de protection arrière de manière qu'une tête de vis et/ou un écrou vienne(nt) en appui sur l'étançon, de manière à comprimer le coutre contre l'étançon. Dans un mode de réalisation préféré illustré sur la figure 6(A4), la tête 56 d'une vis, de préférence de chaque vis, vient en appui, à travers un trou traversant 57 ménagé à travers la plaque de protection arrière, sur l'étançon et l'écrou 58 correspondant est en appui sur la plaque de protection avant. Dans un autre mode de réalisation, la tête 56 d'une vis, de préférence de chaque vis, vient en appui sur la plaque de protection arrière et l'écrou 58 correspondant est en appui, à travers un trou traversant ménagé à travers la plaque de protection avant, sur l'étançon. Dans un mode de réalisation, la tête 56 d'une vis, de préférence de chaque vis, vient en appui, à travers un trou traversant ménagé à travers la plaque de protection avant, sur l'étançon et l'écrou 58 correspondant est en appui sur la plaque de protection arrière. Dans un autre mode de réalisation, la tête 56 d'une vis, de préférence de chaque vis, vient en appui sur la plaque de protection avant et l'écrou 58 correspondant est en appui, à travers un trou traversant ménagé à travers la plaque de protection arrière, sur l'étançon.

La présence d'un aileron dans le quatrième aspect principal de l'invention est préférée, mais optionnelle. De préférence, un porte-aileron est fixé, de préférence par soudure, sur le coutre, de préférence sur la plaque de protection arrière 54b.

### Exemples

Les figures représentent différents exemples selon l'invention. Ces exemples sont fournis à des fins illustratives et non limitatives.

Dans le mode de réalisation de la figure 1, l'aileron est fixé sur la pointe de fissuration. En particulier, la jonction définit un logement pour la tige de la pointe, de préférence de section transversale sensiblement identique à celle de la tige de la pointe. De préférence, une goupille traverse, de préférence verticalement, l'aileron et la pointe, de manière à solidariser l'aileron et la pointe. La goupille peut ne traverser que la paroi supérieure définissant le logement pour la pointe. Elle peut traverser la pointe ou se loger dans un orifice borgne ménagé dans la pointe. De préférence, elle traverse la paroi supérieure définissant ledit logement, traverse la pointe et vient se loger dans un orifice borgne ou traversant ménagé dans la paroi inférieure définissant ledit logement.

Dans le mode de réalisation de la figure 2, le coutre 20 est fixé directement sur l'étançon 16, qui présente une queue de cochon. L'aileron est fixé sur un adaptateur 30 pourvu d'un porte-aileron (mode de réalisation (a) en bas à gauche), ou de deux porte-ailerons à différentes hauteurs (modes de réalisation (b), (c) et (d)). Le porte-aileron présente la forme d'une barre horizontale, logée dans un logement défini par la jonction 38 de l'aileron 26 (modes de réalisation (a) et (b)), ou la forme de deux plaques parallèles horizontales entre lesquelles la jonction, sous la forme d'une plaque plane, est logée (modes de réalisation (c) et (d)). Ces deux modes de fixation de l'aileron sont également illustrés sur la figure 4 (modes de réalisation (B1, B2) et (A1, A2) respectivement). A chaque fois, l'aileron 26 est bloqué en position au moyen d'une tige de blocage 44 verticale. De préférence, la tige de blocage traverse un premier orifice ménagé à travers le porte-aileron, traverse le porte-aileron, et vient se loger dans un deuxième orifice borgne ou traversant ménagé dans le porte-aileron, du côté du porte-aileron opposé au côté du premier orifice.

Les modes de réalisation (c) et (d) diffèrent l'un de l'autre par les moyens de fixation de l'adaptateur sur l'étançon.

Dans le mode de réalisation de la figure 3, l'étançon, en forme de C, est protégé par deux plaques de protection latérales 29 qui supportent ensemble un porte-aileron 40. Le porte-aileron 40 présente la forme de première et deuxième plaques parallèles verticales entre lesquelles la j onction de l'aileron (non représenté), sous la forme d'une plaque verticale, est logée. L'aileron 26 est bloqué en position au moyen d'une tige de blocage horizontale qui traverse des premier et deuxième orifices traversant ménagés dans les première et deuxième plaques, ainsi qu'un orifice traversant la jonction de l'aileron.

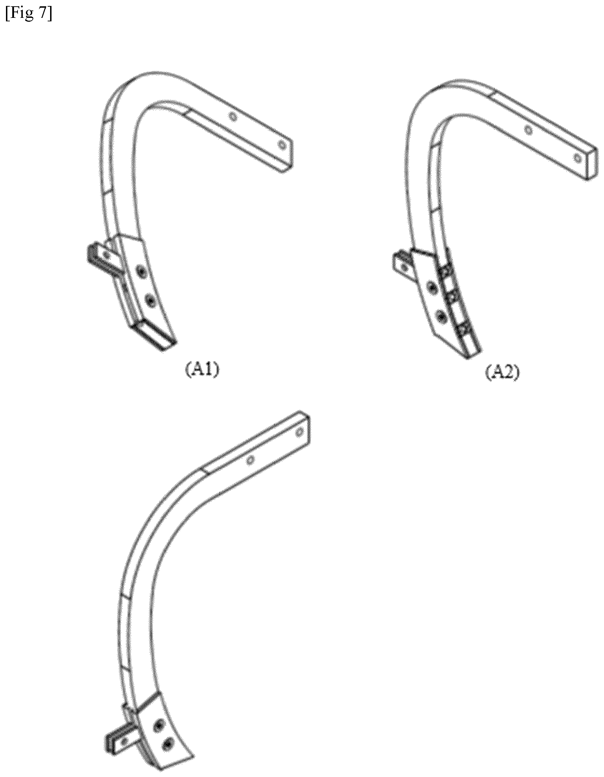

Les deux plaques de protection latérales 29 peuvent être reliées rigidement l'une à l'autre par une plaque de protection avant, comme sur la figure 3. Le plaque de protection avant est cependant optionnelle (voir figure 7).

Dans le mode de réalisation de la figure 4, l'adaptateur 30 est fixé à l'étançon au moyen de boulons 39 longitudinaux, les écrous étant disposés dans des logements ménagés dans le coutre 20. La représentation (A1) montre que l'aileron 26 présente une forme plane, d'épaisseur constante, sensiblement égale à l'écartement entre les deux plaques horizontales du porte-aileron 40.

Bien entendu, l'invention n'est pas limitée aux exemples décrits et représentés, fournis à titre d'exemples illustratifs et non limitatifs.

Notamment, les différents exemples décrits ci-avant peuvent être combinés.

En outre, le porte-aileron décrit précédemment appartient au support d'aileron et a pour fonction d'écarter l'aileron de l'étançon, derrière l'étançon. Cet écartement peut être, de manière équivalente, assurée par une excroissance de la jonction de l'aileron, vers l'avant de l'aileron, ou « espaceur », l'espaceur étant fixé, de manière démontable, au support d'aileron. Ce mode de réalisation permet avantageusement de fixer l'aileron à différentes hauteurs, sans multiplier les porte-ailerons sur le support d'aileron.

## Revendications

1. Dispositif de fissuration destiné à être tracté, selon une direction d'avancement (A), par un engin agricole de manière à fissurer un sol, ledit dispositif comportant
- un étançon (16),
- un coutre (20), et
- un aileron (26),
le coutre et l'aileron étant fixés sur l'étançon, directement ou non, de manière démontable indépendamment l'un de l'autre,
l'aileron étant fixé de manière à être tracté en service,
le dispositif de fissuration étant **caractérisé en ce que** la distance longitudinale (d_{L}) entre le point de traction (T) et le centre d'inertie (G) de l'aileron, mesurée suivant la direction d'avancement, est supérieure à 3 cm,
et **en ce que** la distance longitudinale (d₁₆) entre le point de traction (T) et l'étançon (16), mesurée à la hauteur du point de traction (T) est supérieure à 1 cm.

2. Dispositif selon la revendication immédiatement précédente, dans lequel la distance longitudinale entre le point de traction et le centre d'inertie de l'aileron est supérieure à 5 cm.

3. Dispositif selon l'une quelconque des revendications précédentes, dans lequel la distance longitudinale (d₁₆) entre le point de traction (T) et l'étançon (16), mesurée à la hauteur du point de traction (T) est supérieure à 5 cm.

4. Dispositif selon la revendication immédiatement précédente, dans lequel la distance longitudinale (d₁₆) entre le point de traction (T) et l'étançon (16), mesurée à la hauteur du point de traction (T), est supérieure à 10 cm.

5. Dispositif selon l'une quelconque des revendications précédentes, dans lequel l'aileron (26) est fixé un support d'aileron choisi parmi :
- un adaptateur (30), fixé, de manière démontable, sur l'étançon (16), ou
- un support de coutre (27) fixé sur l'étançon (16), ou
- le coutre (20), fixé sur un support de coutre (27) ou sur l'étançon, ou
- une pointe de fissuration (28) fixée, de manière démontable, sur un support de coutre (27), ou
- une plaque de protection latérale (29) fixée, de manière démontable, sur l'étançon.

6. Dispositif selon la revendication immédiatement précédente, dans lequel l'aileron (26) présente la forme d'une tôle plane d'épaisseur constante, en forme de chevron, fixée entre deux plaques portées par le support d'aileron.

7. Dispositif selon l'une quelconque des deux revendications immédiatement précédentes, dans lequel l'aileron (26) est fixé sur une excroissance allongée d'axe Y, s'étendant vers l'arrière du coutre, dite « porte-aileron » (40), sous la forme d'une ou plusieurs barres et/ou plaques allongées, fixée au support d'aileron.

8. Dispositif selon la revendication immédiatement précédente, dans lequel le porte-aileron (40) définit au moins une butée supérieure (41s) et une butée inférieure (41i) empêchant tout déplacement de l'aileron vers le haut et vers le bas, respectivement.

9. Dispositif selon l'une quelconque des deux revendications immédiatement précédentes, dans lequel l'aileron comporte deux ailettes (36) reliées par une jonction (38), le porte-aileron (40) présentant une forme complémentaire à la jonction de manière à empêcher une rotation de l'aileron autour de l'axe (Y) du porte-aileron.

10. Dispositif selon l'une quelconque des trois revendications immédiatement précédentes, dans lequel l'aileron est bloqué dans une position de verrouillage au moyen d'une tige de blocage (44) dont l'axe (Z) forme, avec un plan perpendiculaire à la direction d'avancement, un angle inférieur à 15°.

11. Appareil de fissuration d'un sol, notamment déchaumeur ou décompacteur ou un cultivateur ou un semoir, comportant plus de 3 dispositifs de fissuration selon l'une quelconque des revendications précédentes, tous fixés à un châssis commun adapté pour être tracté par un engin agricole.
